**Europäisches Patentamt**

**European Patent Office**

**Office européen des brevets**

(19)

(11) Veröffentlichungsnummer: **0 209 713**
**B1**

(12) **EUROPÄISCHE PATENTSCHRIFT**

(45) Veröffentlichungstag der Patentschrift:
**12.12.90**

(21) Anmeldenummer: **86108034.9**

(22) Anmeldetag: **12.06.86**

(51) Int. Cl.⁵: **B32B 31/04**, B32B 27/12,
B32B 3/00

(54) Verfahren zum Herstellen eines Folienverbundes.

(30) Priorität: **14.06.85 DE 3521374**

(43) Veröffentlichungstag der Anmeldung:
**28.01.87 Patentblatt 87/5**

(45) Bekanntmachung des Hinweises auf die Patenterteilung:
**12.12.90 Patentblatt 90/50**

(84) Benannte Vertragsstaaten:
**AT BE CH DE FR GB IT LI NL SE**

(56) Entgegenhaltungen:
DE-A- 2 161 235
GB-A- 1 100 485
US-A- 4 014 341
US-A- 4 351 784

(73) Patentinhaber: **UNILEVER NV, Burgemeester s'Jacobplein 1 P.O. Box 760, NL-3000 DK Rotterdam(NL)**

(84) Benannte Vertragsstaaten: **BE CH DE FR IT LI NL SE AT**

(73) Patentinhaber: **UNILEVER PLC, Unilever House Blackfriars P.O. Box 68, London EC4P 4BQ(GB)**

(84) Benannte Vertragsstaaten: **GB**

(72) Erfinder: **Merz, Winfried, Dr., Sollerin 13, D-8553 Ebermannstadt(DE)**
Erfinder: **Schmidt, Theo, Kiefernweg 7, D-8550 Forchheim(DE)**

(74) Vertreter: **Hutzelmann, Gerhard et al, Duracher Strasse 22, D-8960 Kempten/Allgäu(DE)**

ACTORUM AG

## Beschreibung

Die Erfindung bezieht sich auf ein Verfahren zum Herstellen eines Folienverbundes aus einem flächigen Fasergebilde und einer Kunststoffolie, bei dem die Kunststoffolie im thermoplastischen Zustand, von einer Extruderdüse kommend, mit dem flächigen Fasergebilde unter Einwirkung eines pneumatischen Differenzdruckes verbunden und die Kunststoffolie perforiert und durch die durch die Perforierungen strömende Luft abgekühlt wird.

Aus der GB-A 1 100 485 ist ein derartiges Verfahren bekannt, bei dem die Kunststoffolie auf das Fasergebilde extrudiert wird und durch ein durch dieses hindurchwirkendes Vakuum perforiert wird.

Die Oberflächeneigenschaften der Kunststoffolie sind dabei, insbesondere bie Verwendung als Abdeckfolie von Wegwerfwindeln nicht befriedigend, da sie sich glatt und kalt anfühlen und nicht die angenehmen Eigenschaften einer textilen Windel haben.

Der Erfindung liegt die Aufgabe zugrunde, ein Verfahren aufzuzeigen, mit dem ein Folienverbund hergestellt werden kann, bei dem die perforierte Kunststoffolie weich und elastisch ist und nahezu textile Eigenschaften aufweist.

Diese Aufgabe wird erfindungsgemäß dadurch gelöst, daß die Kunststoffolie unmittelbar von der Extruderdüse kommend auf die siebartige Fläche eines Zylinders aufläuft, und das flächige Fasergebilde auf die von der siebartigen Fläche abgewandte Seite der Kunststoffolie aufgebracht wird, und die durch die Perforierungen strömende Luft auch die siebartige Fläche des Zylinders kühlt, wobei diese Fläche wiederum die unmittelbar an ihr anliegende Kunststoffolie zusätzlich abkühlt.

Durch dieses schnelle Abkühlen wird eine weiche und geschmeidige Folie erhalten, die sich auf der menschlichen Haut angenehm anfühlt.

Aus der US-A 4 351 784 ist zwar ein Verfahren bekannt, bei dem eine von einem Extruder kommende Kunststoffolie unmittelbar auf eine siebartige Fläche eines Zylinders aufläuft, und zwar in einem Bereich, in welchem eine Vakuum-Kammer angeordnet ist. Hierbei geht es aber ausschließlich um die Herstellung einer Monofolie, wobei das Problem der schnellen Abkühlung dort nicht erwähnt ist.

Dadurch, daß das Fasergebilde auf der von der siebartigen Fläche abgewandten Seite der Kunststoffolie angeordnet ist, wird die Perforation ausschließlich von der siebartigen Fläche bestimmt und damit sehr gleichmäßig.

Durch ihren thermoplastischen Zusand während des Auflaufens des Fasergebildes verklebt ihre Oberfläche so stark mit dem Fasergebilde, daß eine innige Verbindung erzielt wird. Dabei ist es von untergeordneter Bedeutung, aus welchem Material diese Fasern bestehen. Durch eine entsprechende Materialauswahl kann jedoch die Intensität der Verbindung gesteuert werden. In erster Linie wird die Materialauswahl des Fasergebildes jedoch nach dem vorgesehenen Verwendungszweck erfolgen.

Es wurde dabei festgestellt, daß der textile Charakter des Fasergebildes in keiner Weise beeinträchtigt wird, vielmehr bleiben seine weichen, griffigen Eigenschaften vollständig erhalten.

In der Zeichnung ist ein Ausführungsbeispiel der Erfindung dargestellt. Dabei zeigen:

Fig. 1 eine Vorrichtung zum Herstellen eines Folienverbundes,

Fig. 2 einen Schnitt durch einen Folienverbund mit einem textilen Gewebe als Fasergebilde.

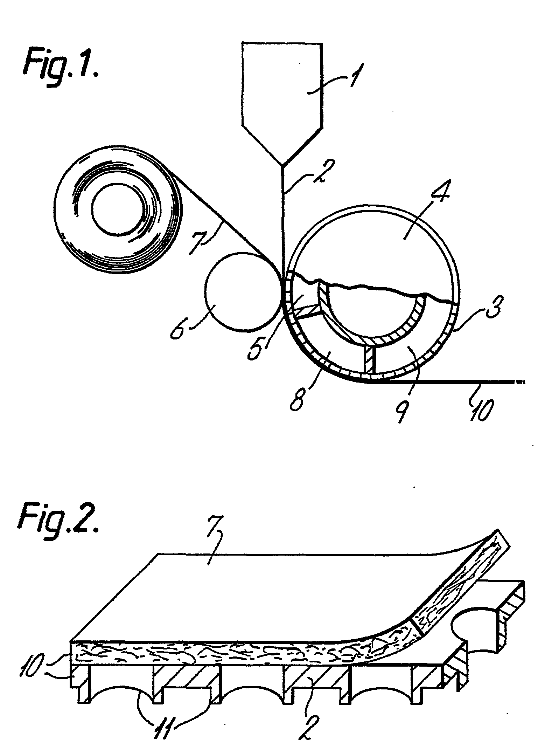

Mit 1 ist in Fig. 1 eine Extruderdüse bezeichnet, von der eine Kunststoffolie 2 aus Polyäthylen der siebartigen Fläche 3 eines Zylinders 4 zugeführt wird. An der Auftreffstelle der Kunststoffolie ist im Inneren des Zylinders 4 eine Saugkammer 5 angeordnet, welche einen pneumatischen Differenzdruck auf die Kunststoffolie ausübt. Gleichzeitig mit der Kunststoffolie läuft von einer Führungswalze 6 geleitet ein Fasergebilde 7 auf die siebartige Fläche 3 auf. Der pneumatische Differenzdruck der Saugkammer 5 saugt Abschnitte der Kunststoffolie in die Öffnungen der siebartigen Fläche hinein, bildet dabei Ausprägungen und perforiert die Folie innerhalb dieser Ausprägungen. Dabei wird Luft durch das Fasergebilde 7 gesaugt, die sowohl dieses gegen die Kunststoffolie preßt und gleichzeitig die Kunststoffolie abkühlt. Die Führungswalze 6 kann dieses Anpressen noch unterstützen, dies ist aber für eine innige Vereinigung der beiden Lagen nicht unbedingt notwendig. Im Zylinder 4 sind noch zwei weitere Saugkammern 8 und 9 angeordnet, von denen die Saugkammer 8 Luft zur Kühlung des fertigen Folienverbundes 10 absaugt, während die Saugkammer 9 der Kühlung der siebartigen Fläche 3 dient.

Beim Ausführungsbeispiel nach Fig. 2 ist der dort dargestellte Folienverbund in der anhand von Fig. 1 erläuterten Weise hergestellt. Die Kunststoffolie 2 hat ihre Ausprägungen 11 an der vom Fasergebilde 7 abgewandten Seite. Dabei ist als Fasergebilde ein textiles Gewebe eingesetzt.

## Patentansprüche

Verfahren zum Herstellen eines Folienverbundes aus einem flächigen Fasergebilde und einer Kunststoffolie, bei dem die Kunststoffolie im thermoplastischen Zustand, von einer Extruderdüse kommend, mit dem flächigen Fasergebilde unter Einwirkung eines pneumatischen Differenzdruckes verbunden und die Kunststoffolie perforiert und durch die durch die Perforierungen strömende Luft abgekühlt wird, dadurch gekennzeichnet, daß die Kunststoffolie unmittelbar von der Extruderdüse kommend auf die siebartige Fläche eines Zylinders aufläuft, und das flächige Fasergebilde auf die von der siebartigen Fläche abgewandte Seite der Kunststoffolie aufgebracht wird, und die durch die Perforierungen strömende Luft auch die siebartige Fläche des Zylinders kühlt, wobei diese Fläche wiederum die unmittelbar an ihr anliegende Kunststoffolie zusätzlich abkühlt.

## Claims

Process for the production of a film combination from a fibrous material and a plastic film, where the plastic film is bonded to the fibrous material under the influence of a vacuum on leaving an extruder die in a thermoplastic condition, is perforated and is cooled by the air that flows through the perforations, wherein the plastic film is extruded directly onto the sievelike surface of a cylinder when it leaves the extruder die, the fibrous material is applied to the side of the plastic film that faces away from the sievelike surface and the air flowing through the perforations also cools the sievelike surface of the cylinder, this surface in turn additionally cooling the plastic film resting directly against it.

## Revendications

Procédé de fabrication d'une feuille laminée faite d'une structure fibreuse bidimensionnelle et d'une feuille de matière synthétique, dans lequel la feuille de matière synthétique à l'état thermoplastique provenant d'une buse d'extrusion est liée à la structure fibreuse bidimensionnelle sous l'action d'une pression différentielle pneumatique et la feuille de matière synthétique est perforée et refroidie par l'air qui sort des perforations, caractérisé en ce que la feuille de matière synthétique sortant immédiatement de la buse d'extrusion est renvidée sur la surface en tamis d'un cylindre, et la structure fibreuse bidimensionnelle est déposé sur le côté de la feuille de matière synthétique opposé à la surface en tamis, et l'air sortant par les perforations refroidit également la surface en tamis du cylindre, cette surface refroidissant à son tour la matière synthétique qui lui est immédiatement voisine.

**Fig.1.**

1

2

4

7

3

6

5

8

9

10

**Fig.2.**

7

10

11

2